(19) **Europäisches Patentamt / European Patent Office / Office européen des brevets**

(11) **EP 3 028 330 B1**

(12) **FASCICULE DE BREVET EUROPEEN**

(45) Date de publication et mention
de la délivrance du brevet:
**15.03.2017 Bulletin 2017/11**

(51) Int Cl.:
*H01M 8/0668* (2016.01)   *H01M 8/0662* (2016.01)
*H01M 8/04089* (2016.01)

(21) Numéro de dépôt: **14748237.6**

(86) Numéro de dépôt international:
**PCT/FR2014/051631**

(22) Date de dépôt: **26.06.2014**

(87) Numéro de publication internationale:
**WO 2015/015072 (05.02.2015 Gazette 2015/05)**

(54) **DISPOSITIF D'ALIMENTATION ET DE RECIRCULATION DE L'HYDROGENE POUR UNE PILE A COMBUSTIBLE**

VORRICHTUNG ZUR ZUFÜHRUNG UND RÜCKFÜHRUNG VON WASSERSTOFF AN EINE BRENNSTOFFZELLE

DEVICE FOR SUPPLYING AND RECIRCULATING HYDROGEN FOR A FUEL CELL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.07.2013 FR 1357448**

(43) Date de publication de la demande:
**08.06.2016 Bulletin 2016/23**

(73) Titulaire: **Commissariat à l'Énergie Atomique et aux Énergies Alternatives 75015 Paris (FR)**

(72) Inventeurs:
• **NGAMENI JIEMBOU, Joseph
  F-91300 Massy (FR)**
• **GUILLET, Nicolas
  F-26300 Pizancon (FR)**

(74) Mandataire: **Cabinet Laurent & Charras
Le Contemporain
50 Chemin de la Bruyère
69574 Dardilly Cedex (FR)**

(56) Documents cités:
**WO-A2-03/063276     JP-A- 2003 213 471
JP-A- 2005 285 626     US-A- 4 732 596**

EP 3 028 330 B1

**EP 3 028 330 B1**

**Description**

**DOMAINE DE L'INVENTION**

L'invention concerne un dispositif permettant d'alimenter une pile à combustible en hydrogène et de purifier et faire recirculer l'hydrogène n'ayant pas été consommé par la pile à combustible.

Le domaine d'utilisation de la présente invention comprend notamment le stockage de l'énergie sous forme d'hydrogène et sa restitution au moyen d'une pile à combustible.

**ETAT ANTERIEUR DE LA TECHNIQUE**

Une pile à combustible conventionnelle comprend un assemblage membrane électrodes (AME) permettant de produire de l'électricité.

Par exemple, dans une pile à combustible à l'hydrogène, l'anode de l'AME permet la dissociation, par oxydation, de l'hydrogène en protons et en électrons. Seuls les protons passent à travers la membrane vers la cathode où ils sont recombinés avec les électrons et de l'oxygène pour former de l'eau.

Le fonctionnement de la pile nécessite généralement un excès d'hydrogène afin d'assurer une répartition uniforme de la pression partielle de gaz réactif au sein de la pile. Ainsi, les performances sont relativement homogènes, cela garantit des performances optimales et réduit la dégradation des constituants de la pile.

L'excès de gaz combustible (hydrogène) est généralement de l'ordre de 5 à 20% par rapport à la quantité nécessaire pour une consommation idéale du système, c'est-à-dire par rapport à une consommation sans perte.

Afin de réduire les coûts engendrés par cet excès d'hydrogène et donc de limiter les pertes d'énergie, plusieurs solutions ont été envisagées :

- le gaz combustible (hydrogène) peut de manière continue alimenter le compartiment anodique qui est fermé (« dead end »). Ce compartiment doit cependant être purgé périodiquement ;
- le gaz combustible en excès n'ayant pas été consommé est réintroduit dans le compartiment anodique à l'aide d'un re-circulateur (pompe).

Cependant, dans ces deux types de système, l'accumulation d'impuretés, provenant généralement du gaz introduit ($H_2$, air ambiant), nécessite une purge régulière du circuit au cours de l'utilisation de la pile à combustible. Ces impuretés incluent notamment l'eau, l'azote, le dioxyde de carbone et éventuellement le monoxyde de carbone.

Le circuit étant pressurisé, la purge du circuit est typiquement réalisée par l'ouverture d'une vanne située en aval du compartiment anodique, ce qui entraine nécessairement des pertes de combustible, généralement de l'ordre de 2 et 5% par rapport à la consommation idéale du système.

D'autre part, lorsque la pile à combustible n'est pas utilisée, il peut être avantageux de s'assurer que les compartiments anodique et cathodique sont exempts d'hydrogène et d'oxygène.

En effet, en présence d'oxygène dans le compartiment cathodique et d'hydrogène dans le compartiment anodique et en l'absence de production électrique, les cellules électrochimiques peuvent être soumises à des tensions élevées qui engendrent la dégradation des matériaux de la pile à combustible. (voir référence GORE http://iet.jrc.ec.europa.eu/fuel-cells/sites/fuel-cells/files/files/documents/events/mea_degradation_issues_opportunities_and_challenges_using_thin_reinforced_polymer_electrolyte_membranes_-_w.johnson.pdf).

Les catalyseurs et leur support peuvent ainsi être oxydés, et la membrane échangeuse de protons est généralement soumise à des réactions chimiques conduisant à la formation de radicaux hydroxyl et de peroxyde d'hydrogène menant à sa dégradation.

La purge des compartiments anodique et cathodique au moyen d'un gaz inerte (azote, dioxyde de carbone), permet de réduire significativement ces phénomènes de dégradation. La pile à combustible peut ainsi être associée à un dispositif de purge qui permet de générer un gaz « inerte » par séparation de l'oxygène et de l'azote contenus dans l'air. Cependant, ce type de dispositif n'est pas totalement satisfaisant eu égard à son encombrement.

Le Demandeur a développé un dispositif compact permettant de résoudre les problèmes de l'art antérieur qui sont notamment liés à :

- l'accumulation de polluants dans l'hydrogène recyclé ;
- la surconsommation d'hydrogène ;
- la dégradation des compartiments anodique et cathodique lorsque la pile est à l'arrêt ;
- le stockage du gaz de purge.

La présente invention concerne un système de recirculation de l'hydrogène, de purification de l'hydrogène, et

2

de séparation et de stockage des gaz inertes initialement contenus dans l'hydrogène.

**EXPOSE DE L'INVENTION**

La présente invention concerne un dispositif de recirculation de l'hydrogène pour une pile à combustible, permettant notamment d'améliorer le rendement global du système générateur électrique que constitue une pile à combustible. Il permet en outre un gain significatif en termes d'encombrement par rapport aux dispositifs de l'art antérieur.
Plus précisément, l'objet de l'invention est un dispositif d'alimentation et de recirculation de l'hydrogène pour une pile à combustible, comprenant :

- une unité d'alimentation en hydrogène comprenant une ligne d'alimentation L apte à être connectée à l'entrée du compartiment anodique d'une pile à combustible ;
- une unité de purification et de compression de l'hydrogène présentant une sortie A, une sortie B, et une entrée E apte à être connectée au moins à la sortie du compartiment anodique d'une pile à combustible, la sortie A étant apte à être connectée à l'entrée du compartiment anodique d'une pile à combustible ;
- un réservoir de stockage de gaz, comprenant une entrée connectée à la sortie B de l'unité de purification et de compression de l'hydrogène, et une sortie connectée à la ligne d'alimentation L via une vanne.

L'unité de purification et de compression de l'hydrogène peut être positionnée sur la ligne d'alimentation L, en aval de l'unité d'alimentation en hydrogène, c'est-à-dire entre l'unité d'alimentation en hydrogène et le compartiment anodique d'une pile à combustible. Elle comprend une entrée E d'hydrogène à purifier, et une sortie A d'hydrogène.
Cette unité permet donc de purifier l'hydrogène dans un premier temps et de compresser l'hydrogène purifié afin de pouvoir le réinjecter dans la pile à combustible.
La pile à combustible est alimentée avec de l'hydrogène, dont la pression est généralement comprise entre 1.2 à 2 bars. En raison de la perte de charge lors de son transport et de la consommation d'une partie de l'hydrogène dans la pile à combustible, la pression de l'hydrogène n'ayant pas été consommé est généralement inférieure à sa pression d'entrée dans la pile. Typiquement, il s'agit d'une différence de pression de l'ordre de quelques centaines de millibars.
Afin de pouvoir réinjecter l'hydrogène n'ayant pas été consommé, l'hydrogène est généralement compressé à une pression devant être supérieure à la pression d'injection d'alimentation de la pile à combustible.
Cette pressurisation peut notamment être mise en oeuvre au moyen d'une pompe, avantageusement positionnée à la sortie du dispositif de purification. Dans ce cas, l'unité de purification et de compression de l'hydrogène comprend un bloc de purification et un bloc de compression.
Plusieurs modes de réalisation sont disponibles pour purifier l'hydrogène :

- purification par passage dans une membrane à perméation. Il peut notamment s'agir d'une membrane métallique permettant la diffusion sélective de l'hydrogène en raison de la très faible perméabilité aux autres gaz. Elle peut par exemple être à base d'un alliage de palladium, tel que décrit par Burkhanov et al (Platinum Metals Rev., 2011, 55, (1)) ;
- purification par liquéfaction de l'hydrogène. Il peut notamment s'agir d'un dispositif permettant de refroidir l'hydrogène par passage dans un échangeur de chaleur, de manière à le liquéfier comme décrit dans le document FR 1 483 519 ;
- purification par adsorption sélective. Ce type de purificateur peut comprendre un ou plusieurs lits d'adsorbant solide capable d'adsorber sélectivement le $CO_2$ et l'eau mais aussi une unité de séparation cryogénique de l'hydrogène et du CO. Un tel dispositif est décrit dans le document US 4,732,596 ;
- purification électrochimique au moyen d'une membrane échangeuse de protons, par oxydation de l'hydrogène, transfert des protons ainsi formés au travers de la membrane et réduction des protons. Ce type de dispositif nécessite un AME (assemblage membrane-électrodes) dont la membrane peut être adaptée à une utilisation à basse température (GB 1 107 114) ou à haute température (US 2007/246374) en présence d'humidité ou non. Il peut être couplé à un compresseur ou à un purificateur/compresseur électrochimique à plusieurs étages comme décrit dans la demande de brevet FR 13.56158 ou PCT/FR2014/051614.

Selon un mode de réalisation particulier, l'unité de purification et de compression de l'hydrogène comprend :

- une entrée E et une sortie A d'hydrogène ;
- au moins un assemblage membrane-électrodes (AME), chaque assemblage membrane-électrodes formant une cellule électrochimique ; le au moins un AME étant agencé, entre l'entrée E et la sortie A, de sorte à être traversé par un flux d'hydrogène, et étant connectés en série les uns aux autres lorsque le dispositif en comprend plusieurs. L'AME comprend une surface active apte à assurer les réactions d'oxydation de l'hydrogène à l'anode puis de dégagement d'hydrogène à la cathode. En outre, chaque AME est connecté à une source externe de courant électrique, avantageusement une source unique pour l'ensemble des AME le cas échéant.

Ainsi, selon ce mode de réalisation particulier, l'unité de purification et de compression de l'hydrogène permet tout d'abord d'oxyder l'hydrogène à l'anode de l'AME. Les protons ainsi obtenus migrent à travers la membrane qui est une membrane échangeuse de protons, vers la cathode où ils sont réduits en hydrogène. Le flux de moles de protons $n_{H+}$ qui traverse la membrane dépend notamment de l'intensité I du courant électrique appliqué aux bornes de l'AME selon la réaction suivante :

$$I = 2\,F.n_{H+}, \text{ F étant la constante de Faraday.}$$

La membrane étant une membrane échangeuse de protons, seuls les protons, généralement solvatés avec de l'eau, traversent cette dernière. En effet, de manière avantageuse, la membrane est imperméable aux gaz, ce qui permet ainsi de purifier l'hydrogène injecté.
Ce dispositif de purification comprenant un AME peut donc être couplé à un compresseur pour pressuriser l'hydrogène avant sa réinjection dans la ligne d'alimentation de la pile à combustible.
Cependant, et selon un mode de réalisation particulier, l'étape de purification de l'hydrogène peut également permettre de compresser l'hydrogène purifié. Un tel système peut être composé d'un seul AME présentant ces deux fonctionnalités ou comprendre plusieurs AME disposés en série dans le sens de circulation de l'hydrogène. Il s'agit alors d'un purificateur/compresseur électrochimique à plusieurs étages
De manière générale, l'espacement entre AME (cellules électrochimiques) adjacentes de ce type de dispositif formant un purificateur/compresseur électrochimique à plusieurs étages, peut varier suivant le flux d'hydrogène à travers le compresseur.
La diminution de l'espacement entre cellules électrochimiques voisines peut permettre un gain en pression d'hydrogène lié uniquement à la géométrie du dispositif lorsque le flux de protons passant à travers la membrane de chaque AME est constant le long du purificateur/compresseur électrochimique à plusieurs étages.
Selon un mode de réalisation particulier, l'aire de la surface ($S_n$) d'une $n^{ième}$ cellule électrochimique (n étant un nombre entier) du purificateur/compresseur électrochimique à plusieurs étages comprenant une pluralité de cellules est déterminée par la relation suivante :

$$S_n = \frac{S_1 \times j_1}{j_n} = \frac{S_2 \times j_2}{j_n} = \dots$$

dans laquelle, ($S_1$) et ($S_2$) représentent l'aire de la surface de la première et la deuxième cellule électrochimique respectivement, et ($j_1$), ($j_2$) et ($j_n$) représentent la densité de courant traversant respectivement la première, la deuxième et la $n^{ième}$ cellule électrochimique.
La surface $S_n$ correspond à la surface active de la membrane de l'AME, c'est-à-dire la surface assurant les réactions d'oxydoréduction de l'hydrogène.
De manière encore plus avantageuse, ladite densité de courant ($j_n$) est définie par la relation suivante :

$$j_n = \frac{n_g - (\alpha + \beta T) - (\gamma + \xi T)p_{H_2}^n}{(\delta + \eta T) + \mu p_{H_2}^n},$$

dans laquelle :

- $n_g$ représente le ratio entre le nombre de moles d'eau entourant les protons et le nombre de moles des protons traversant la cellule électrochimique et dépend de la nature de la membrane utilisée dans la cellule électrochimique ;
- ($\alpha$), ($\beta$), ($\gamma$), ($\delta$), ($\eta$), ($\xi$) et ($\mu$) sont des constantes, avantageusement déterminées de manière empirique pour le matériau considéré (membrane utilisée) ;
- (T) représente la température de fonctionnement du dispositif et est avantageusement constante ;

- $\left( p_{H_2}^n \right)$ représente la pression partielle en hydrogène en sortie de la n$^{\text{ième}}$ cellule électrochimique.

La dépendance du paramètre $n_g$ en fonction de la pression et de la densité de courant permet de quantifier les variations de $n_g$ et d'adapter la géométrie du dispositif en conséquence.

Par exemple, l'augmentation de la densité de courant par réduction de la surface active de la membrane peut permettre d'augmenter la pression d'hydrogène lorsque le flux de protons passant à travers les membranes des AME est constant.

Dans ce type de purificateur/compresseur électrochimique à plusieurs étages, chaque assemblage membrane-électrodes formant une cellule électrochimique est agencé, entre l'entrée E et la sortie A, de sorte à être traversé par un flux d'hydrogène.

Comme déjà dit, et de manière avantageuse, lorsque l'unité de purification et de compression de l'hydrogène comprend une pluralité d'AME, lesdits AME peuvent présenter des surfaces actives distinctes les unes des autres, et dont l'aire de la surface évolue selon la direction de circulation de l'hydrogène.

Lorsque la même intensité de courant électrique est appliquée aux bornes de chacun des AME de l'unité de purification et de compression de l'hydrogène, l'hydrogène est compressé.
La diminution de l'aire des surfaces des cellules électrochimiques a pour conséquence une répartition sur une surface plus petite du courant constant appliqué aux cellules. Ceci résulte en une augmentation de la densité de courant appliquée aux électrodes des cellules électrochimiques suivant le flux d'hydrogène dans le compresseur. En augmentant la densité de courant appliquée, l'hydrogène est compressé.

Dans le dispositif selon l'invention, le réservoir de stockage de gaz peut être connecté à la ligne d'alimentation L en aval de la sortie A de l'unité de purification et de compression de l'hydrogène.

A l'issue de la purification de l'hydrogène, le gaz inerte est avantageusement stocké dans le réservoir à une pression supérieure à la pression du mélange gazeux en sortie du compartiment anodique de la pile à combustible. La compression du ou des gaz inertes permet de réduire la taille du réservoir ou d'augmenter le volume de gaz stocké.

Ainsi, selon un mode de réalisation particulier, le réservoir peut également être associé à un compresseur (mécanique, électrique,...), de manière à pouvoir stocker les gaz inertes sous pression.

Selon un autre mode de réalisation particulier, le dispositif comprend en outre une unité de condensation d'eau intercalée entre l'unité de séparation et de compression de l'hydrogène et le réservoir de stockage des gaz inertes. Cette unité de condensation de l'eau est connectée à la sortie B de l'unité de purification et de compression de l'hydrogène. Elle comprend une sortie de gaz connectée au réservoir de stockage, et un système d'évacuation de l'eau.

La présente invention concerne également l'utilisation du dispositif décrit ci-dessus dans un procédé de purification de l'hydrogène et de génération de gaz de purge par passage de l'hydrogène dans ledit dispositif. Ce gaz de purge est un gaz inerte pouvant être utilisé pour évacuer les gaz réactifs présents dans une pile à combustible. Le gaz de purge est constitué des gaz contenus initialement dans l'hydrogène introduit, séparés de l'hydrogène et éventuellement rendus inertes par oxydation au contact de l'électrode anodique du système de purification (vapeur d'eau, azote, dioxyde de carbone).

Le procédé de purge d'une pile à combustible à l'hydrogène peut consister :

- à injecter de l'hydrogène dans le dispositif décrit ci-dessus ;
- à séparer, récupérer et stocker, dans le réservoir, les gaz éventuellement rendus inertes par oxydation, contenus dans l'hydrogène injecté ;
- à purger le compartiment anodique d'une pile à combustible avec les gaz inertes stockés.

Selon un mode de réalisation particulier, le compartiment cathodique peut également être purgé avec les gaz inertes stockés dans le réservoir.

La purge des compartiments anodique et cathodique est avantageusement réalisée par passages successif du gaz de purge dans les deux compartiments. En d'autres termes, le compartiment anodique est purgé dans un premier temps. Ensuite, le compartiment cathodique est purgé avec le gaz ayant préalablement servi à purger le compartiment anodique. Ainsi, le flux sortant du compartiment anodique est dirigé vers le compartiment cathodique pour le purger.

De manière avantageuse, le volume de gaz nécessaire pour purger le compartiment anodique représente plusieurs fois le volume de ce compartiment. Ainsi, selon un mode de réalisation particulier, un volume de gaz représentant 10 fois le volume du compartiment anodique est utilisé pour purger ce dernier.

La purge permet un arrêt rapide de l'alimentation électrique de la pile au cours d'un arrêt volontaire ou un arrêt d'urgence. En outre, le fait d'évacuer les gaz réactifs et l'eau présents dans la pile à combustible permet de faciliter les opérations de redémarrage de la pile à combustible. En effet si ces gaz réactifs étaient maintenus au sein de la pile alors qu'elle est arrêtée, ceux-ci pourraient se combiner et former de l'eau liquide ou solide (à basse température).

Lorsque les deux compartiments anodiques et cathodiques sont purgés, les dimensions du réservoir de stockage sont adaptées en conséquence pour recueillir et stocker suffisamment de gaz inerte, le reste étant généralement évacué du dispositif selon l'invention.

Typiquement, le gaz utilisé dans le compartiment cathodique étant de l'air (environ 80% d'azote, 20% d'oxygène), la purge de ce compartiment peut nécessiter un volume de gaz inerte moins important.

Le réservoir utilisé pour stocker temporairement les gaz inertes issus du mélange de gaz issus du compartiment anodique de la pile à combustible est dimensionné en fonction des besoins (quantité de gaz nécessaire, pression de stockage). Compte tenu de ces contraintes, mais également aux contraintes de masse et celles liées à la température de fonctionnement, le réservoir peut être constitué en métal (acier, aluminium), en polymère (PVC, polyéthylène), ou en matériaux composites (fibres de verre, de carbone, de kevlar ... associées à une résine).

L'invention et les avantages qui en découlent ressortiront mieux des figures et exemples suivants donnés afin d'illustrer l'invention, et ce, de manière non limitative.

## DESCRIPTION DES FIGURES

La figure 1 illustre un dispositif d'alimentation et de recirculation de l'hydrogène pour une pile à combustible, selon un mode de réalisation particulier de l'invention.

La figure 2 illustre un dispositif d'alimentation et de recirculation de l'hydrogène pour une pile à combustible, selon un autre mode de réalisation particulier de l'invention.

La figure 3 illustre une pile à combustible pouvant être connectée au dispositif d'alimentation et de recirculation de l'hydrogène selon l'invention.

## DESCRIPTION DETAILLEE DE L'INVENTION

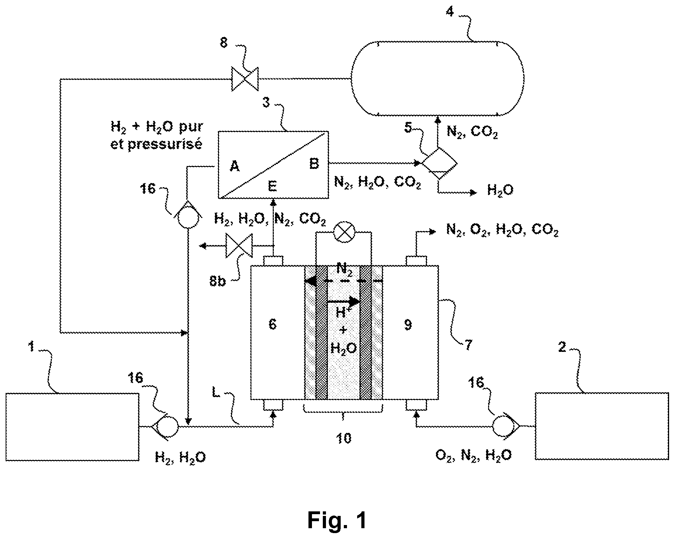

Le dispositif illustré par la figure 1 est particulièrement adapté pour l'utilisation d'hydrogène humidifié. Il comprend :

- une unité (1) d'alimentation en gaz combustible, en l'occurrence de l'hydrogène humidifié. L'unité (1) comprend une ligne d'alimentation L connectée à l'entrée du compartiment anodique (6) d'une pile à combustible ;
- une unité (3) de purification et de compression de l'hydrogène présentant une sortie A, une sortie B, et une entrée E. La sortie A est connectée à la ligne d'alimentation L, en aval de l'unité (1). La sortie B est connectée à l'unité (5) décrite ci-après. L'entrée E est connectée à la sortie du compartiment anodique (6) de la pile à combustible (7).
- une unité (5) de condensation d'eau, connectée à la sortie B de l'unité (3) de purification et de compression de l'hydrogène. Cette unité (5) comprend une sortie de gaz et un système d'évacuation d'eau ;
- un réservoir (4) de stockage de gaz, comprenant une entrée connectée à la sortie de gaz de l'unité (5) de condensation d'eau, et une sortie connectée à la ligne d'alimentation L via une vanne (8). Le réservoir (4) permet de stocker des gaz inertes qui proviennent du fonctionnement de la pile à combustible (réactions électrochimiques, perméation à travers la membrane) ou initialement contenus dans l'hydrogène injecté au moyen de l'unité (1). En cas d'arrêt volontaire ou d'arrêt d'urgence, l'alimentation (1) est coupée et les vannes (8) et (8b) sont ouvertes. Les gaz inertes stockés dans le réservoir (4) peuvent alors servir à purger le compartiment anodique (6) auquel le réservoir (4) est relié via la ligne d'alimentation L.

Ce dispositif comprend en outre, une unité (2) d'alimentation en gaz comburant (air humidifié : par exemple compresseur d'air et humidificateur) vers le compartiment cathodique (9) de la pile à combustible (7).

La pile à combustible (7) comprend un assemblage membrane électrode, AME (10). L'AME est constitué d'une anode (12) associée à la couche de diffusion de gaz (11), de la membrane échangeuse de protons (13), et de la cathode (14) associée à la couche de diffusion de gaz (115).

Selon ce mode de réalisation particulier, les sorties des unités (1), (3) (sortie A), et (2) peuvent comprendre des clapets anti retour (16) régulant le flux de sortie des gaz.

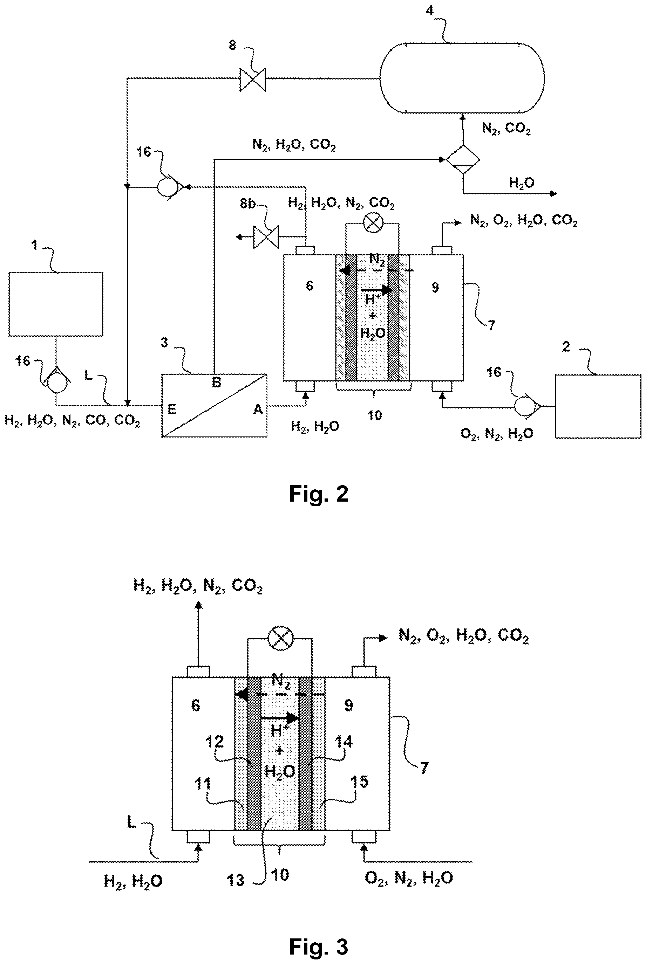

Le dispositif illustré par la figure 2 est particulièrement adapté pour une pile à combustible alimentée en hydrogène issu du reformage d'un hydrocarbure ou de biocarburant. Ce dispositif comprend :

- une unité (1) d'alimentation en gaz combustible, en l'occurrence de l'hydrogène. L'unité (1) comprend une ligne d'alimentation L connectée à l'unité (3) ;
- une unité (3) de purification et de compression de l'hydrogène. Elle se situe sur la ligne d'alimentation L, elle est intercalée entre l'unité (1) et le compartiment anodique (6) de la pile à combustible (7). L'unité (3) comprend une sortie A, une sortie B, et une entrée E. La sortie A est connectée à l'entrée du compartiment anodique (6) de la pile à combustible (7). La sortie B est connectée à l'unité (5) décrite ci-après. L'entrée E est connectée à la sortie de l'unité (1) d'alimentation en gaz combustible.

- une unité (5) de condensation d'eau, connectée à la sortie B de l'unité (3) de purification et de compression de l'hydrogène. Cette unité (5) comprend une sortie de gaz et un système d'évacuation d'eau ;
- un réservoir (4) de stockage de gaz, comprenant une entrée connectée à la sortie de gaz de l'unité (5) de condensation d'eau, et une sortie connectée à la ligne d'alimentation L via une vanne (8) en aval du réservoir (4) et en amont de l'unité (3). Le réservoir (4) permet de stocker des gaz inertes, rendus inertes et séparés de l'hydrogène par l'unité de purification, injecté au moyen de l'unité (1). Les gaz inertes peuvent ainsi être utilisés purger le compartiment anodique (6) auquel le réservoir (4) est relié via la ligne d'alimentation L et l'unité (3).

Selon ce mode de réalisation particulier, les sorties des unités (1), (2), et (6) peuvent comprendre des clapets anti-retour (15) régulant le flux de sortie des gaz.

Ce dispositif comprend en outre, une unité (2) d'alimentation en gaz comburant (air humidifié : par exemple compresseur d'air et humidificateur) vers le compartiment cathodique (9) de la pile à combustible (7).

Dans le cas de l'utilisation d'hydrogène reformé (issu du reformage catalytique d'un hydrocarbure ou de d'un combustible carboné), l'unité (3) de purification / compression peut être placée en aval de l'unité (1) d'alimentation en hydrogène (reformeur catalytique) et en amont du compartiment anodique (6) de la pile à combustible (7).

L'unité (3) de purification et de compression de l'hydrogène comprend au moins un AME relié à une source externe de courant électrique. Elle permet de séparer l'hydrogène des autres gaz inertes par oxydation électro-catalytique.

Dans le but d'assurer l'oxydation de l'intégralité du monoxyde de carbone provenant du reformeur catalytique (1), la différence de potentiel appliquée aux bornes du purificateur / compresseur électrochimique est généralement plus importante (250 mV) que la tension strictement nécessaire à l'oxydation de la totalité de l'hydrogène présent dans le mélange gazeux provenant du reformeur catalytique (1) à l'entrée (E) et à la réduction des protons ainsi produit pour donner de l'hydrogène purifié en (A).

## EXEMPLE DE REALISATION DE L'INVENTION

Exemple 1 (figure 1)

Dans le cas d'une pile à combustible de 1 kW fonctionnant avec de l'hydrogène (combustible) et de l'air (comburant), le volume de gaz réactifs dans la pile est de l'ordre de 50 ml pour chaque gaz.

A régime constant et à une pression de 160 kPa, la pile consomme directement environ 600 Nl/h d'hydrogène (53 g/h ; $\eta$ = 57 % du PCI) (N1 = Normal litre, volume de gaz mesuré dans les conditions dites « normales » de température et de pression : CNTP , 0°C, 101,325 kPa; PCI = pouvoir calorifique inférieur , 242 kJ/mol d'hydrogène à 25°C).

Un sur-débit de 20% implique un flux d'hydrogène de 720 Nl/h (64 g/h).

Le système de purification/compression est donc apte à traiter entre 120 et 150 Nl/h de mélange gazeux ($H_2$, $N_2$, $H_2O$, ...) dont 120 Nl/h d'hydrogène maximum.

La consommation énergétique du purificateur / compresseur électrochimique est de l'ordre de 30 W, il peut rejeter jusqu'à 30 Nl/h de gaz inerte ($N_2$, $H_2O$, $CO_2$) à la pression de fonctionnement de la pile (160 kPa).

La purge du compartiment anodique ou cathodique consiste à faire circuler un gaz inerte, dont le volume représente 10 fois le volume du gaz réactif contenu dans ce compartiment.

Dans le cas de la pile de 1kW, 0,5 Nl de gaz inerte est nécessaire pour expulser les gaz réactifs de l'anode et de la cathode.

Cela correspond à quelques minutes de fonctionnement du purificateur (60 secondes à 30 Nl/h).

Compte tenu de la pression de fonctionnement (160 kPa), le volume du réservoir de stockage peut donc être limité à 310 ml.

## Revendications

1. Dispositif d'alimentation et de recirculation de l'hydrogène pour une pile à combustible, comprenant :

- une unité (1) d'alimentation en hydrogène comprenant une ligne d'alimentation L apte à être connectée à l'entrée du compartiment anodique (6) d'une pile à combustible ;
- une unité (3) de purification et de compression de l'hydrogène présentant une sortie A, une sortie B, et une entrée E apte à être connectée au moins à la sortie du compartiment anodique (6) d'une pile à combustible, la sortie A étant apte à être connectée à l'entrée du compartiment anodique (6) d'une pile à combustible ;
- un réservoir (4) de stockage de gaz, comprenant une entrée connectée à la sortie B de l'unité de purification et de compression de l'hydrogène, et une sortie connectée à la ligne d'alimentation L via une vanne ;

l'unité (3) de purification et de compression de l'hydrogène comprenant au moins un assemblage membrane-électrodes (AME) formant une cellule électrochimique, étant agencé entre l'entrée E et la sortie A, de sorte à être traversé par un flux d'hydrogène, et comprenant une surface active apte à assurer les réactions d'oxydo-réduction de l'hydrogène ; l'AME étant connecté à une source externe de courant électrique.

2. Dispositif selon la revendication 1, *caractérisé* **en ce que** l'unité (3) de purification et de compression de l'hydrogène est sur la ligne d'alimentation L, en aval de l'unité (1) d'alimentation en hydrogène.

3. Dispositif selon la revendication 1 ou 2, *caractérisé* **en ce que** le réservoir (4) de stockage de gaz est connecté à la ligne d'alimentation L en aval de la sortie A de l'unité (3) de purification et de compression de l'hydrogène.

4. Dispositif selon la revendication 1 ou 2, *caractérisé* **en ce que** le réservoir (4) de stockage de gaz est connecté à la ligne d'alimentation L en amont de l'entrée E de l'unité (3) de purification et de compression de l'hydrogène.

5. Dispositif selon l'une des revendications 1 à 4, *caractérisé* **en ce que** l'unité (3) de purification et de compression de l'hydrogène comprend plusieurs AME disposés en série dans le sens de circulation de l'hydrogène et connectés à une source externe de courant électrique unique.

6. Dispositif selon la revendication 5, *caractérisé* **en ce que** l'unité (3) de purification et de compression de l'hydrogène comprend une pluralité d'AME présentant des surfaces actives distinctes les uns des autres.

7. Dispositif selon l'une des revendications 1 à 6, *caractérisé* **en ce que** le réservoir (4) est associé à un compresseur.

8. Dispositif selon l'une des revendications 1 à 7, *caractérisé* **en ce qu'**il comprend une unité (5) de condensation d'eau, intercalée entre l'unité de séparation et de compression de l'hydrogène et le réservoir de stockage des gaz inertes.

9. Utilisation du dispositif objet de l'une des revendications 1 à 8, pour purifier de l'hydrogène et générer un gaz inerte pouvant être utilisé pour évacuer les gaz réactifs présents dans une pile à combustible.

10. Procédé de purge d'une pile à combustible à l'hydrogène consistant :

- à injecter de l'hydrogène dans le dispositif objet de l'une des revendications 1 à 8 ;
- à séparer, récupérer et stocker, dans le réservoir, les gaz inertes contenus dans l'hydrogène ;
- à purger le compartiment anodique d'une pile à combustible avec les gaz inertes stockés.

11. Procédé de purge d'une pile à combustible à l'hydrogène selon la revendication 10, *caractérisé* **en ce que** le compartiment cathodique est purgé avec les gaz inertes préalablement utilisés pour purger le compartiment anodique.

**Patentansprüche**

1. Vorrichtung zur Zuführung und Rückführung von Wasserstoff an eine Brennstoffzelle, umfassend:

- eine Einheit (1) zur Wasserstoffzufuhr, die eine Zuleitung L enthält, die mit dem Eingang der Anodenkammer (6) einer Brennstoffzelle verbunden werden kann;
- eine Einheit (3) zur Reinigung und Kompression des Wasserstoffs, mit einem Ausgang A, einem Ausgang B und einem Eingang E, der zumindest mit dem Ausgang der Anodenkammer (6) einer Brennstoffzelle verbunden werden kann, der Ausgang A kann mit dem Eingang der Anodenkammer (6) einer Brennstoffzelle verbunden werden;
- ein Gasspeicherbehälter (4), mit einem Eingang verbunden mit dem Ausgang B der Wasserstoff - Reinigungs- und Kompressionseinheit, und einem Ausgang, der über ein Ventil mit der Zuleitung L verbunden ist;

Einheit (3) zur Reinigung und Kompression des Wasserstoffs, die mindestens eine Membran-Elektrodeneinheit (MEA), die eine elektrochemische Zelle bildet und zwischen dem Eingang E und dem Ausgang A angeordnet ist, so dass sie von einem Wasserstoffstrom durchflossen wird, und eine aktive Oberfläche aufweist, die in der Lage ist, die Redoxreaktionen des Wasserstoffs zu gewährleisten umfasst; die MEA ist mit einer externen elektrischen Stromquelle verbunden.

2. Vorrichtung gemäß Anspruch 1, *dadurch gekennzeichnet, dass* die Einheit (3) zur Reinigung und Kompression des Wasserstoffes sich in der Zuleitung L stromab von der Wasserstoffzufuhreinheit (1) befindet.

3. Vorrichtung gemäß Anspruch 1 oder 2, *dadurch gekennzeichnet, dass* der Gasspeicherbehälter (4) mit der Zuleitung L stromab von dem Ausgang A der Einheit (3) zur Reinigung und Kompression des Wasserstoffs verbunden ist.

4. Vorrichtung gemäß Anspruch 1 oder 2, *dadurch gekennzeichnet, dass* der Gasspeicherbehälter (4) mit der Zuleitung L stromauf von dem Eingang E der Einheit (3) zur Reinigung und Kompression des Wasserstoffs verbunden ist.

5. Vorrichtung gemäß einem der Ansprüche 1 bis 4, *dadurch gekennzeichnet, dass* die Einheit (3) zur Reinigung und Kompression des Wasserstoffs mehrere MEA enthält, die seriell in Fließrichtung des Wasserstoffs angeordnet und mit einer einzigen externen elektrischen Stromquelle verbunden sind.

6. Vorrichtung gemäß Anspruch 5, *dadurch gekennzeichnet, dass* die Einheit (3) zur Reinigung und Kompression des Wasserstoffs mehrere MEA enthält, die aktive, voneinander getrennte Oberflächen aufweisen.

7. Vorrichtung gemäß einem der Ansprüche 1 bis 6, *dadurch gekennzeichnet, dass* der Gasspeicherbehälter (4) mit einem Kompressor verbunden ist.

8. Vorrichtung gemäß einem der Ansprüche 1 bis 7, *dadurch gekennzeichnet, dass* sie eine Einheit zur Wasserkondensation (5) enthält, die zwischen der Einheit zur Trennung und Kompression des Wasserstoffs und dem Speicherreservoir für inerte Gase angeordnet ist.

9. Einsatz der Vorrichtung, die Gegenstand irgendeines der Ansprüche 1 bis 8 ist, zur Reinigung von Wasserstoff und Erzeugung eines inerten Gases, das zur Beseitigung der in einer Brennstoffzelle vorhandenen reaktiven Gase eingesetzt werden kann.

10. Verfahren zur Entleerung einer Wasserstoff-Brennstoffzelle, das darin besteht:

   - Wasserstoff in die Vorrichtung, die Gegenstand eines der Ansprüche 1 bis 8 ist einzuspritzen;
   - die im Wasserstoff enthaltenen inerten Gase abzuscheiden, aufzufangen und im Speicher zu lagern;
   - die Anodenkammer einer Brennstoffzelle mit den gespeicherten inerten Gasen zu entleeren.

11. Verfahren zur Entleerung einer Wasserstoff-Brennstoffzelle gemäß Anspruch 10, **dadurch gekennzeichnet, dass** die Kathodenkammer mit den inerten Gasen entleert wird, die zuvor benutzt wurden, um die Anodenkammer zu entleeren.

**Claims**

1. Device for supplying and recirculating hydrogen for a fuel cell, including:

   - a unit (1) for supplying hydrogen, incorporating a feed line L that can be connected to the inlet of the anodic compartment (6) of a fuel cell;
   - a unit (3) for purifying and compressing the hydrogen, having one output A, one output B and one input E that can be connected to at least the outlet of the anodic compartment (6) of a fuel cell, with the output A being connectable to the input of the anodic compartment (6) of a fuel cell;
   - a tank (4) for storing gas, incorporating one input connected to the output B of the hydrogen purification and compression unit, and one output connected to the feed line L via a valve;

the hydrogen purification and compression unit (3) includes at least one membrane/electrodes assembly (MEA) forming an electrochemical cell, it being arranged between the input E and the output A, so that it is traversed by a hydrogen flow, and incorporates an active surface able to produce the oxido-reduction reactions of the hydrogen, with the MEA being connected to an external electrical power source.

2. Device in accordance with claim 1, *characterized in that* the hydrogen purification and compression unit (3) is on the feed line L, downstream of the hydrogen supply unit (1).

3. Device according to claim 1 or 2, *characterized in that* the gas storage tank (4) is connected to the feed line L downstream of the output A of the hydrogen purification and compression unit (3).

4. Device according to claim 1 or 2, *characterized in that* the gas storage tank (4) is connected to the feed line L upstream of the input E of the hydrogen purification and compression unit (3).

5. Device according to one of claims 1 to 4, *characterized in that* the hydrogen purification and compression unit (3) incorporates several MEAs positioned in series in the direction of circulation of the hydrogen and connected to a single external electrical power source.

6. Device according to claim 5, *characterized in that* the hydrogen purification and compression unit (3) includes multiple MEAs with active surfaces that are separate from each other.

7. Device according to one of claims 1 to 6, *characterized in that* the tank (4) is associated with a compressor.

8. Device according to one of claims 1 to 7, *characterized in that* it includes a water condensation unit (5) inserted between the hydrogen separation and compression unit and the inert gases storage.

9. Use of the device addressed by one of claims 1 to 8, to purify hydrogen and generate an inert gas that can be used to evacuate the reactive gases present in a fuel cell.

10. Process for purging a hydrogen fuel cell, consisting in:

- injecting hydrogen into the device addressed in one of claims 1 to 8;
- separating, recovering and storing the inert gases contained in the hydrogen, in the tank;
- purging the anodic compartment of a fuel cell with the inert gases stored.

11. Process for purging a hydrogen fuel cell in accordance with claim 10, *characterized in that* the cathodic compartment is purged with the inert gases previously used for purging the anodic compartment.

**Fig. 1**

**Fig. 2**

**Fig. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1483519
- US 4732596 A
- GB 1107114 A
- US 2007246374 A
- FR 1356158
- FR 2014051614 W

**Littérature non-brevet citée dans la description**

- **BURKHANOV et al.** *Platinum Metals Rev.,* 2011, vol. 55 (1